# EUROPÄISCHE PATENTSCHRIFT

(11) **EP 3 326 857 B1**
(45) Veröffentlichungstag und Bekanntmachung des Hinweises auf die Patenterteilung: **13.05.2020**
(21) Anmeldenummer: 17200047.3
(22) Anmeldetag: 06.11.2017
(51) Int. Cl.: B60N 2/015, B62D 21/02, B62D 25/20, B62D 65/14

(54) **HALTEELEMENT ZUR BEFESTIGUNG EINES FAHRZEUGSITZES**
HOLDING ELEMENT FOR FASTENING A VEHICLE SEAT
ÉLÉMENT DE MAINTIEN PERMETTANT DE FIXER UN SIÈGE DE VÉHICULE

(30) Priorität: 29.11.2016 DE 102016122966
(43) Veröffentlichungstag der Anmeldung: 30.05.2018
(73) Patentinhaber: AGUTI PRODUKTENTWICKLUNG & DESIGN GMBH, 88085 Langenargen (DE)
(72) Erfinder: Grieger, Andreas, 88079 Kressbronn (DE); Rogg, Christian, 88142 Wasserburg (DE)
(74) Vertreter: Otten, Roth, Dobler & Partner mbB Patentanwälte

(56) Entgegenhaltungen:
- DE-A1- 10 047 956
- DE-A1- 19 812 084
- DE-A1-102004 019 089
- US-A1- 2011 241 381

## Beschreibung

### Stand der Technik

Vorrichtungen zur Befestigung eines Fahrzeugsitzes an einem Fahrzeug sind aus der DE 100 47 956 A1 sowie aus der US 2011/0241381 A1 bekannt.

Eine Befestigungsvariante eines Fahrzeugsitzes an einem Fahrzeug ist beispielsweise als ein Blech ausgebildet, welches als ein Widerlager dient, und welches eine Öffnung für ein Befestigungsmittel in Form einer Schraube oder Niete aufweist, wobei das Blech auf einer dem Fahrzeugsitz gegenüberliegende Seite eines Holms eines Fahrzeugrahmens anordenbar ist und das Befestigungsmittel das Blech und den Holm im angeordneten Zustand durchgreift, bzw. durch das Blech und den Holm durchschiebbar ist, insbesondere durch eine Bohrung des Holms, um auf der, dem Blech gegenüberliegenden Seite des Holms mit dem Fahrzeugsitz verbunden zu werden und diesen somit fest am Fahrzeugrahmen anzuordnen.

Nachteilig hieran ist, dass zur Befestigung des Fahrzeugsitzes der Holm des Fahrzeugrahmens angebohrt wird, wodurch Wasser in den insbesondere hohlen Holm eindringen kann und der Holm mit der Zeit rostet.

### Aufgabe und Vorteile der Erfindung

Der Erfindung liegt die Aufgabe zugrunde, ein alternatives Halteelement zur Befestigung eines Fahrzeugsitzes an einem Fahrzeug bereitzustellen.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Halteelement, insbesondere einem Kastenprofil, zur Befestigung eines Fahrzeugsitzes an einem Fahrzeug aus, wobei ein Fahrzeugboden des Fahrzeugs an einem Rahmenprofil des Fahrzeugs befestigt ist.

Das Rahmenprofil eines Fahrzeugs ist insbesondere als ein in einem Querschnitt rechteckiger Holm ausgebildet. Das Rahmenprofil ist vorteilhafterweise als insbesondere hohles Vierkantprofil vorhanden. Der Fahrzeugboden ist beispielsweise auf dem Rahmenprofil befestigt, z.B. aufgelegt. Der Fahrzeugboden kann beispielsweise aus einem Blech ausgestaltet sein. Denkbar ist auch, dass der Fahrzeugboden als ein Mehrschichtsystem vorhanden ist.

Das Fahrzeug ist vorteilhafterweise als ein Automobil, z.B. als ein Wohnmobil, als ein Reisemobil und/oder als ein Caravan ausgebildet. Vorstellbar ist allerdings auch, dass das Fahrzeug als ein Wohnwagen bzw. als ein Wohnanhänger ausgestaltet ist.

Der Fahrzeugsitz kann als ein Fahrer- oder Beifahrersitz vorhanden sein und insbesondere in einem vorderen Bereich des Fahrzeugs anordenbar sein. Denkbar ist auch, dass der Fahrzeugsitz in einem hinteren Bereich des Fahrzeugs anordenbar ist. Der Fahrzeugsitz kann beispielsweise als ein Einzelsitz oder eine Sitzbank mit zwei oder mehr Sitzen ausgestaltet sein.

Der wesentliche Aspekt der Erfindung ist nun darin zu sehen, dass das Halteelement an einer Unterseite des Fahrzeugbodens anordenbar ist, wobei das Halteelement eine Ausnehmung umfasst, wobei im angeordneten Zustand des Halteelements am Fahrzeug das Rahmenprofil in der Ausnehmung aufgenommen ist, und wobei das Halteelement eine Höhe aufweist, welche größer ist, als eine Höhe des Rahmenprofils.

Hierdurch ist das Halteelement an das Rahmenprofil anordenbar und der Fahrzeugsitz am Rahmen und insbesondere am Rahmenprofil des Fahrzeugs durch das Halteelement befestigbar, ohne dass das Rahmenprofil verändert ist. Insbesondere ist eine Befestigung des Haltelements am Rahmenprofil durch eine Schraube und/oder durch eine Schweißnaht und/oder durch eine Niete nicht notwendig. Damit ist eine Korrosion des Rahmenprofils insbesondere an einem Befestigungsbereich des Fahrzeugsitzes verringert bzw. verhindert.

Vorteilhafterweise ist das Halteelement in einer Weise ausgebildet, dass es in einer Höhe und/oder einer Breite des Rahmenprofils ausgenommen ist, wobei das Halteelement eine Höhe besitzt, welche größer ist, als die Höhe des Rahmenprofils. Bevorzugterweise umschließt das Halteelement das Rahmenprofil im angeordneten Zustand. Insbesondere umschließt das Halteelement das Rahmenprofil an drei Seiten des Rahmenprofils, wobei eine vierte Seite des Rahmenprofils beispielsweise vom Fahrzeugboden abgedeckt ist. Hierdurch ist das Rahmenprofil im angeordneten Zustand des Halteelements und des Fahrzeugbodens vorteilhafterweise an vier Seiten umschlossen.

Die Ausnehmung ist vorteilhafterweise eckig ausgebildet. Im angeordneten Zustand des Halteelements ist jeweils eine Anstehfläche der Ausnehmung und eine Seite des Rahmenprofils sich gegenüberliegend vorhanden, insbesondere stößt eine Anstehfläche jeweils an eine Rahmenprofilseite an. Vorteilhafterweise ist die Ausnehmung derart ausgebildet, dass im angeordneten Zustand am Fahrzeug das Halteelement zumindest durch zwei erste Anstehflächen an zwei Seiten des Rahmenprofils ansteht, wobei die Anstehflächen der Ausnehmung zumindest annähernd senkrecht zueinander und parallel zueinander ausgerichtet vorhanden sind. Beispielsweise weist die Ausnehmung drei Anstehflächen auf, wobei eine dritte Anstehfläche senkrecht zu den beiden ersten Anstehflächen ausgebildet ist, z.B. U-profilförmig. Von Vorteil erweist sich auch, dass im angeordneten Zustand am Fahrzeug das Halteelement mit allen drei Anstehflächen an jeweils einer Seite des Rahmenprofils ansteht. Hierdurch ist das Halteelement verdrehsicher am Rahmenprofil anordenbar.

Als vorteilhaft erweist sich ebenfalls, dass das Halteelement Befestigungsmittel zur Anordnung des Fahrzeugsitzes aufweist, wobei die Befestigungsmittel derart am Halteelement vorhanden sind, sodass im angeordneten Zustand des Halteelements am Fahrzeug die Befestigungsmittel das Rahmenprofil nicht durchdringen. Hierdurch sind keine Durchgangslöcher am Rahmenprofil, zum Durchgreifen des Rahmenprofils mittels Befestigungsmittel, notwendig. Dadurch ist eine Korrosion des Rahmenprofils am Befestigungsbereich des Fahrzeugsitzes verringert, bzw. verhindert.

Vorteilhafterweise sind die Befestigungsmittel am Halteelement derart ausgebildet, dass im angeordneten Zustand des Halteelements am Fahrzeug die Befestigungsmittel neben und/oder überhalb des Rahmenprofils am Halteelement angeordnet sind.

Bei der Erfindung ist das Halteelement an den Fahrzeugboden und/oder an das Rahmenprofil ansteckbar und/oder aufsteckbar ausgestaltet, wobei das Halteelement im angeordneten Zustand lösbar mit dem Fahrzeugboden und/oder dem Rahmenprofil verbindbar ist. Das Halteelement ist im angeordneten Zustand z.B. nicht durch eine Schraub-, Niet-, Klebe- und/oder Schweißverbindung mit dem Rahmenprofil verbunden.

Vorteilhafterweise sind die Befestigungsmittel dazu vorgesehen, im angeordneten Zustand des Halteelements am Fahrzeug den Fahrzeugboden zu durchgreifen und den Fahrzeugboden zwischen einer Aufstellfläche des Fahrzeugsitzes und dem Halteelement zu klemmen.

Auch ist es von Vorteil, dass das Halteelement mindestens zwei, bevorzugterweise drei oder insbesondere vier Stützstellen aufweist, wobei im angeordneten Zustand des Halteelements am Fahrzeug die Stützstellen sich in einer Ebene parallel zum Fahrzeugboden erstrecken, wobei die Stützstellen dazu vorgesehen sind, mit dem Fahrzeugsitz verbunden zu werden.

Eine Stützstelle umfasst vorteilhafterweise eine Anlagefläche zur Anlage an die Aufstellfläche des Fahrzeugsitzes und/oder zur Anlage an eine Unterseite eines Fahrzeugbodens. Die Stützstelle ist beispielsweise im angeordneten Zustand des Halteelements parallel zum Fahrzeugboden vorhanden. Z.B. ist die Stützstelle in Form eines insbesondere flachen Blechs vorhanden.

Beispielsweise umfasst die Ausnehmung mindestens eine Stützstelle, wobei die Stützstelle sich von einer Öffnung der Ausnehmung weg erstreckt. Die Ausnehmung ist insbesondere einstückig mit der Stützstelle vorhanden, z.B. als ein Blechbiegeteil ausgebildet.

Vorteilhafterweise sind die Stützstellen derart am Halteelement ausgebildet, dass im angeordneten Zustand des Halteelements am Fahrzeug in einer Fahrtrichtung des Fahrzeugs gesehen die Stützstellen hintereinander, zueinander versetzt bzw. beabstandet am Halteelement vorhanden sind.

Bevorzugterweise ist das Halteelement derart ausgebildet, dass im angeordneten Zustand des Halteelements am Rahmenprofil das Rahmenprofil zwischen zwei Stützstellen vorhanden ist.

Vorteilhafterweise ist im angeordneten Zustand des Halteelements am Rahmenprofil eine erste Stützstelle weiter vom Rahmenprofil beabstandet am Halteelement vorhanden als eine zweite Stützstelle. Denkbar ist auch, dass sich im angeordneten Zustand des Halteelements am Rahmenprofil die erste Stützstelle sich in einer Länge weiter vom Rahmenprofil weg erstreckt, als die zweite Stützstelle. Als vorteilhaft erweist sich auch, dass drei Stützstellen am Halteelement vorhanden sind, wobei im angeordneten Zustand des Halteelements am Rahmenprofil zwei Stützstellen sich gegenüberliegend neben dem Rahmenprofil am Halteelement vorhanden sind und eine dritte Stützstelle insbesondere in Fahrtrichtung des Fahrzeugs gesehen von den Stützstellen beabstandet am Halteelement vorhanden ist. Hierdurch ist das Halteelement dazu ausgebildet eine Kraft vom Fahrzeugsitz aufzunehmen, insbesondere im Belastungsfall des Fahrzeugsitzes, z.B. eine durch einen Unfall des Fahrzeugs auf den Fahrzeugsitz einwirkende Kraft, und auf das Rahmenprofil zu übertragen bzw. weiterzuleiten. Vorteilhafteweise ohne dass größere Schäden, insbesondere irreparable Totalschäden, am Fahrzeug bzw. am Fahrzeugboden entstehen.

Weiter wird vorgeschlagen, dass das Halteelement derart vorhanden und an das Fahrzeug anordenbar ist, dass im angeordneten Zustand des Halteelements am Fahrzeug das Rahmenprofil zwischen dem Halteelement und dem Fahrzeugsitz geklemmt ist, ggf. mit einem dazwischen liegenden Fahrzeugboden. Hierdurch ist eine Position des Fahrzeugsitzes am Fahrzeug festgelegt und das Halteelement ist positionsfest an das Rahmenprofil anordenbar.

Vorteilhafterweise ist das Rahmenprofil des Fahrzeugs im angeordneten Zustand des Halteelements und des Fahrzeugsitzes am Fahrzeug zwischen dem Halteelement und dem Fahrzeugsitz geklemmt. Denkbar ist weiterhin, dass sich im geklemmten Zustand zwischen dem Rahmenprofil und dem Fahrzeugsitz, insbesondere der Aufstellfläche des Fahrzeugsitzes, der Fahrzeugboden befindet, welcher in diesem Fall ebenfalls geklemmt vorhanden ist, insbesondere zwischen Rahmenprofil und Fahrzeugsitz.

Die Klemmung wird bevorzugterweise dadurch erreicht, dass im angeordneten Zustand des Halteelements und des Fahrzeugsitzes am Fahrzeug Befestigungsmittel des Halteelements, z.B. Schrauben, das Halteelement mit dem Fahrzeugsitz verbinden und hierdurch eine Zugkraft zwischen Halteelement und Fahrzeugsitz realisiert ist, welche für eine Klemmung des zwischen dem Halteelement und dem Fahrzeugsitz vorhandenen Rahmenprofils sorgt.

In einer vorteilhaften Variante des Halteelements sind an einer Stützstelle Befestigungsmittel vorhanden.

Die Stützstelle umfasst vorteilhafterweise eine Öffnung, z.B. in Form einer Bohrung, an welche ein Befestigungsmittel anordenbar, z.B. durchsteckbar ist. Vorteilhafterweise umfassen die Befestigungsmittel einen Bolzen und/oder eine Schraube. Denkbar ist auch, dass an der Stützstelle die Befestigungsmittel fest, insbesondere unlösbar vorhanden sind. Beispielsweise kann ein Bolzen, und/oder eine Gewindestange an der Stützstelle abstehend vorhanden sein. Denkbar ist, dass der Bolzen und/oder die Gewindestange an die Stützstelle geschweißt ist.

Auch ist es von Vorteil, dass ein Befestigungsmittel dazu ausgebildet ist, ein Sicherheitsorgan eines Personensicherheitssystems, z.B. eine Gurtpeitsche, anzuordnen.

Vorteilhafterweise sind die Befestigungsmittel in einer Weise vorhanden, insbesondere abstehend am Halteelement vorhanden, dass im angeordneten Zustand des Halteelements am Fahrzeug, insbesondere am Fahrzeugsitz, das Halteelement fest mit dem Fahrzeugsitz verbunden, z.B. verschraubt, verschweißt und/oder vernietet werden kann. Bevorzugterweise besitzt zumindest ein Befestigungsmittel eine derartige Länge, dass das Befestigungsmittel im angeordneten Zustand des Halteelements eine Befestigungsstelle des Fahrzeugsitzes überstehend durchgreift und dabei ggf. einen Fußboden des Fahrzeugs durchgreift, sodass am überstehenden Ende des Befestigungsmittels das Sicherheitsorgan am Befestigungsmittel fixierbar ist.

Überdies ist es von Vorteil, dass zwei Stützstellen mittels eines Verbindungselements, insbesondere durch zwei, drei oder vier Verbindungselemente, miteinander verbunden sind, wobei das Verbindungselement die Höhe des Halteelements definiert, wobei im angeordneten Zustand des Halteelements am Fahrzeug das Verbindungselement sich in einer Ebene senkrecht zum Fahrzeugboden erstreckt.

Des Weiteren ist es von Vorteil, dass das Halteelement zwei Verbindungselemente aufweist und die Stützstellen die beiden Verbindungselemente verbinden.

Vorteilhafterweise erstreckt sich das Verbindungselement im angeordneten Zustand des Halteelements am Fahrzeug parallel zur Fahrtrichtung des Fahrzeugs. Vorteilhafterweise ist eine Erstreckungsrichtung und/oder Erstreckungsebene des Verbindungselements senkrecht zu einer Stützstelle, insbesondere zur Anlagefläche der Stützstelle, ausgebildet. Hierdurch ist eine Stabilität des Halteelements zur Aufnahme einer durch den Fahrzeugsitz auf das Halteelement übertragbaren Kraft verbessert.

Vorstellbar ist weiterhin, dass das Verbindungselement die Ausnehmung umfasst. Denkbar ist auch, dass das Verbindungselement eine Aussparung für die Ausnehmung aufweist. Vorstellbar ist, dass die Ausnehmung an oder in die Aussparung des Verbindungselements anordenbar ist. Hierdurch ist eine Kraftübertragung vom Halteelement, insbesondere vom Verbindungselement, auf das Rahmenprofil verbessert.

In einer vorteilhaften Modifikation des Halteelements ist die Ausnehmung des Halteelements als ein U-Profil ausgestaltet, welches im angeordnet Zustand des Halteelements am Fahrzeug das Rahmenprofil umgreift bzw. umschließt, wobei an offenen Enden des U-Profils jeweils eine Stützstelle vorhanden ist.

Vorteilhafterweise ist eine Höhe des U-Profils der Haltevorrichtung kleiner oder gleich der Gesamthöhe des Halteelements. Bevorzugterweise umfasst das Halteelement, insbesondere die Ausnehmung und/oder das Verbindungselement, die drei Anstehflächen. Das U-Profil ist beispielsweise aus einem Blech gebogen und verbindet insbesondere zwei Verbindungselemente miteinander, wobei die Verbindungselemente vorteilhafterweise parallel zueinander, insbesondere beabstandet nebeneinander vorhanden sind. Vorteilhafterweise ist das U-Profil mit dem Verbindungselement fest und unlösbar verbunden, z.B. verschweißt und/oder vernietet. Auch vorstellbar ist, dass das Verbindungselement das U-Profil umfasst. Beispielsweise ist die Aussparung U-profilartig vorhanden.

Auch wird vorgeschlagen, dass das Verbindungselement sich zwischen zwei oder mehr Stützstellen erstreckt, wobei das Verbindungselement zwischen den zwei oder mehr Stützstellen eine Höhe aufweist, welche mindestens der Hälfte einer Gesamthöhe des Verbindungselements insbesondere einer Höhe des Halteelements entspricht, insbesondere mindestens 80% der Gesamthöhe des Verbindungselements, insbesondere 80% der Höhe des Halteelements entspricht.

Vorteilhafterweise besitzt das Verbindungselement zwischen den Stützstellen eine Höhe, welche 50%, 60%, 70%, 80%, 90%, 100% der Gesamthöhe H des Verbindungselements, insbesondere der Höhe des Halteelements, entspricht.

Bevorzugterweise besitzt das Verbindungselement zwischen den beiden Stützstellen über zumindest 70% eines Abstands der beiden Stützstellen eine Höhe, welche der Gesamthöhe des Verbindungselements entspricht, insbesondere über 75%, 80%, 85%, 90%, 95%, bevorzugt über 100% des Abstands der beiden Stützstellen.

Es ist überdies vorteilhaft, dass die Stützstellen derart am Haltelement vorhanden sind, dass zwischen zumindest zwei Stützstellen eine Öffnung ausgebildet ist, sodass, insbesondere im angeordneten Zustand des Halteelements am Fahrzeug, ein Gegenstand durch das Halteelement fallen kann. Vorteilhafterweise ist die Öffnung durch zwei Stützstellen und zwei Verbindungselemente begrenzt.

Im angeordneten Zustand des Halteelements am Fahrzeug erstreckt sich die Öffnung vorteilhafterweise senkrecht und parallel zu einer Fahrtrichtung des Fahrzeugs und parallel zum Fahrzeugboden zwischen den beiden Stützstellen am Halteelement.

Der Gegenstand kann z.B. ein Metallspan, eine Schraube oder ähnliche Gegenstände, welche bei einer Montage des Fahrzeugs entstehen und/oder herunterfallen sein. Denkbar ist auch, dass der Gegenstand Feuchtigkeit z.B. in Form eines Wassertropfens ist. Hierdurch ist eine Korrosion des Halteelements verhindert. Vorteilhafterweise fällt der Gegenstand durch die Öffnung und damit durch das Halteelement hindurch. Ebenfalls ist hierdurch das Halteelement vergleichsweise leicht ausgebildet.

Überdies ist es vorteilhaft, dass ein Stabilisierungselement vorhanden ist, wobei das Stabilisierungselement die Verbindungselemente miteinander verbindet, wobei das Stabilisierungselement sich in einer Ebene senkrecht zu den Verbindungselementen, insbesondere senkrecht zu einer Erstreckungsrichtung der Verbindungselemente, erstreckt und wobei die Ebene des Stabilisierungselements sich in einem Winkel zu den Stützstellen, insbesondere senkrecht zu den Stützstellen erstreckt. Hierdurch ist die Stabilität des Halteelements vergleichsweise erhöht.

Das Stabilisierungselement, das Stützelement und das Verbindungselement sind vorteilhafterweise derart vorhanden, dass die drei Elemente sich jeweils in einer Haupterstreckungsrichtung senkrecht zu den zwei anderen Elementen, insbesondere zu den beiden Haupterstreckungsrichtungen der beiden anderen Elemente erstrecken.

Vorstellbar ist, dass eine Stützstelle das Stabilisierungselement umfasst, z.B. ist die Stützstelle L-förmig vorhanden, beispielsweise als L-förmiges Blech. Denkbar ist weiterhin, dass das Stabilisierungselement zwei Verbindungselemente miteinander verbindet.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert.

Es zeigen:
- Figur 1: ein erfindungsgemäßes Halteelement in einer perspektivischen Ansicht von schräg seitlich vorne oben,
- Figuren 2 bis 6: das Halteelement aus Figur 1 in einer Seitenansicht, einer Draufsicht, einer Unteransicht, einer Ansicht von vorne und einer Ansicht von hinten,
- Figur 7: eine Variante eines Halteelement in einer perspektivischen Ansicht von schräg seitlich hinten oben,
- Figuren 8 bis 12: das Halteelement aus Figur 7 in einer Seitenansicht, einer Draufsicht, einer Unteransicht, einer Ansicht von hinten und einer Ansicht von vorne,
- Figur 13: eine weitere Variante eines Halteelements in einer perspektivischen Ansicht von schräg seitlich vorne oben,
- Figur 14: eine perspektivische Ansicht von schräg seitlich oben hinten auf ein Gurtgestell eines Fahrzeugsitzes mit angeordnetem Halteelement in der Variante nach Figur 13 und
- Figur 15: eine perspektivische Ansicht von schräg unten auf ein Fahrgestell mit angeordnetem Halteelement nach Figur 1 und einem angeordnetem Gurtgestell eines Fahrzeugsitzes ohne Fahrzeugboden.

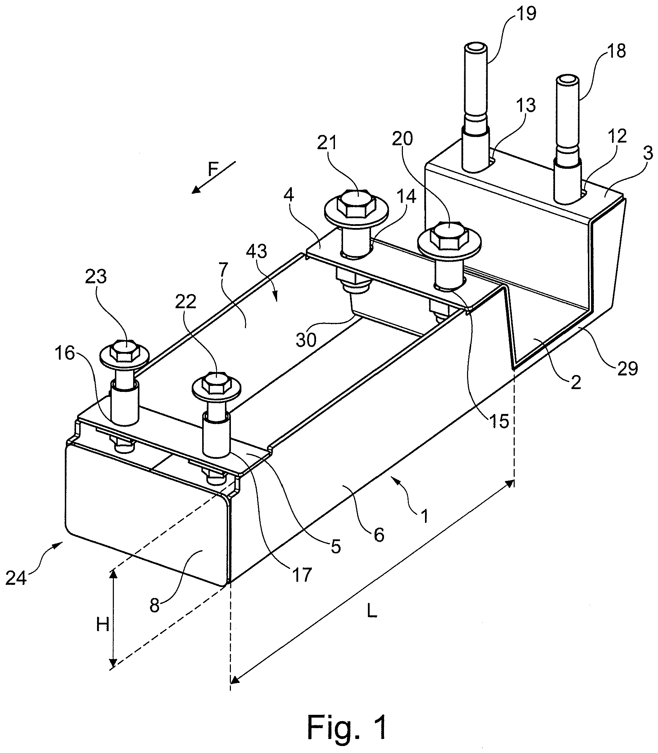

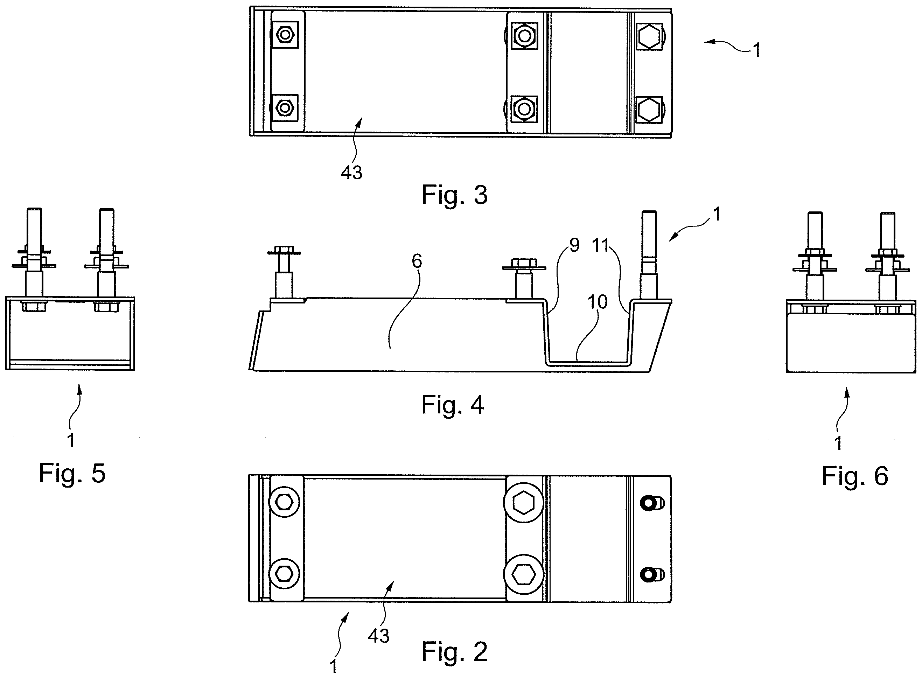

Ein erfindungsgemäßes Halteelement 1 umfasst eine Ausnehmung 2, drei Stützstellen 3 - 5, zwei Verbindungselemente 6, 7 sowie ein Stabilisierungselement 8 (Figuren 1 bis 6). Die Ausnehmung 2, die Stützstellen 3 - 5, die Verbindungselemente 6, 7 und das Stabilisierungselement 8 sind vorteilhafterweise aus einem vergleichsweise schmalen Blech ausgestaltet, insbesondere aus einem rostfreien Material. Hierdurch ist das Halteelement 1 vergleichsweise kostengünstig herstellbar. Die vorangegangen Komponenten sind vorteilhafterweise aneinander geschweißt.

Die Ausnehmung 2 ist z.B. als U-förmiges Profil ausgebildet und weist drei Anstehflächen 9 - 11 auf, wobei zwei erste Anstehflächen 9, 11 sich gegenüberliegend und vorteilhafterweise parallel zueinander ausgerichtet vorhanden sind. Eine dritte Anstehfläche 10 ist beispielsweise senkrecht zu den beiden ersten Anstehfläche 9, 11 vorhanden und verbindet die beiden ersten Anstehflächen 9, 11 miteinander. Durch die Anordnung der drei Anstehflächen 9 - 11 zueinander ist die Ausnehmung 2 vorteilhafterweise U-förmig ausgebildet.

An einem, der dritten Anstehfläche 10 gegenüberliegenden Ende der ersten Anstehflächen 9, 11 kann an der Ausnehmung 2 eine Stützstelle 3, 4 angeordnet sein. Die Stützstelle 3, 4 besitzt z.B. eine Stützfläche und ist vorteilhafterweise zusammen mit den Anstehflächen 9 - 11 einstückig ausgebildet. Die Stützfläche der Stützstelle 3, 4 erstreckt sich beispielsweise parallel zur dritten Anstehfläche 10 und weg von der ersten Anstehfläche 9, 11. Die Stützstelle 3, 4 ist beispielsweise gegenüberliegend zur dritten Anstehfläche 10 an der ersten Anstehfläche 9, 11 vorhanden. Vorteilhafterweise sind zwei Stützstellen 3, 4 an der Ausnehmung 2 angeordnet, wobei die beiden Stützstellen 3, 4 sich gegenüberliegend und beabstandet voneinander ausgebildet sind.

Eine Stützstelle 3 - 5 umfasst vorteilhafterweise Aussparungen 12 - 17, z.B. in Form einer Bohrung, an welche Befestigungsmittel 18 - 23 anordenbar, insbesondere durchsteckbar sind. Wobei die Befestigungsmittel 18 - 23 z.B. in Form von Schrauben, Bolzen und/oder Gewindestangen vorliegen. Des Weiteren können die Befestigungsmittel 18 - 23 auch eine Unterlegscheibe, eine Hülse, eine Schraubenmutter und/oder eine weitere Komponente umfassen.

Die dritte Stützstelle 5 ist vorteilhafterweise von den beiden ersten Stützstellen 3, 4 beabstandet an einem vorderen Ende 24 des Halteelements 1 vorhanden. Das Halteelement 1 wird vorteilhafterweise mit seinem vorderen Ende 24 in Fahrtrichtung F eines Fahrzeugs gesehen am Fahrzeug bzw. an einem Fahrzeugrahmen 28 angeordnet. Hierdurch kann das Halteelement 1 Kräfte, welche von einer Schrägstütze 25 eines Gurtgestells 26 eines Fahrzeugsitzes, beispielsweise in einem Belastungsfall, zum Beispiel bei einem Frontalzusammenstoß, auf das Fahrzeug, insbesondere einen Fahrzeugboden einwirken, durch das Halteelement 1, insbesondere durch die dritte Stützstelle 5 aufgenommen werden und mittels der Verbindungselemente 6, 7 auf ein Rahmenprofil 27 des Fahrzeugrahmens 28 übertragen werden.

Die Verbindungselemente 6, 7 sind vorteilhafterweise senkrecht zu den Stützstellen 3 - 5 ausgerichtet am Halteelement 1 vorhanden und verbinden die Stützstellen 3 - 5 und die Ausnehmung 2 miteinander. Beispielsweise umfasst jedes Verbindungselement 6, 7 eine Aussparung 29, 30, in welche die Ausnehmung 2 einsetzbar ist. Vorteilhafterweise sind die Ausnehmung 2 und die Aussparung 29, 30 formschlüssig und insbesondere drehsicher miteinander verbindbar. Die Verbindungselemente 6, 7 beranden zusammen mit zwei Stützstellen 4, 5 vorteilhafterweise eine Öffnung 43 des Halteelements 1.

Am vorderen Ende 24 des Halteelements 1 ist vorteilhafterweise das Stabilisierungselement 8 angeordnet. Das Stabilisierungselement 8 verbindet vorteilhafterweise die beiden Verbindungselemente 6, 7 miteinander. Das Stabilisierungselement 8 ist beispielsweise senkrecht zu den Verbindungselementen 6, 7 und senkrecht zu den Stützstellen 3 - 5 ausgerichtet am Halteelement 1 ausgebildet. Durch die Anordnung des Stabilisierungselements 8 ist eine Stabilität des Halteelements 1 erhöht.

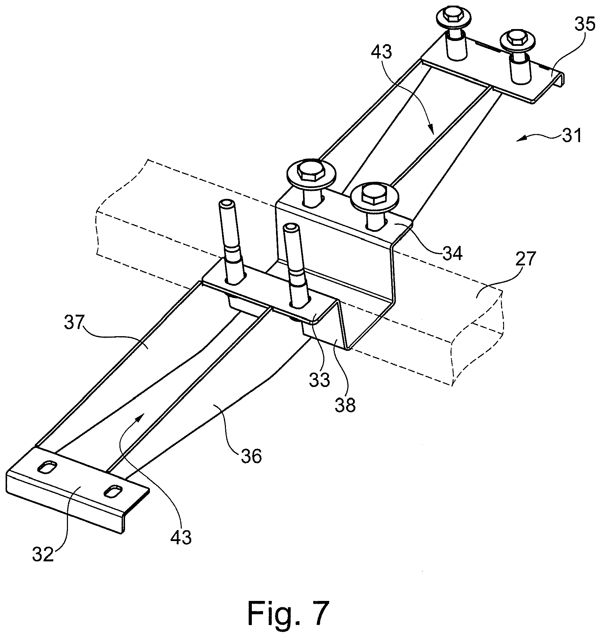

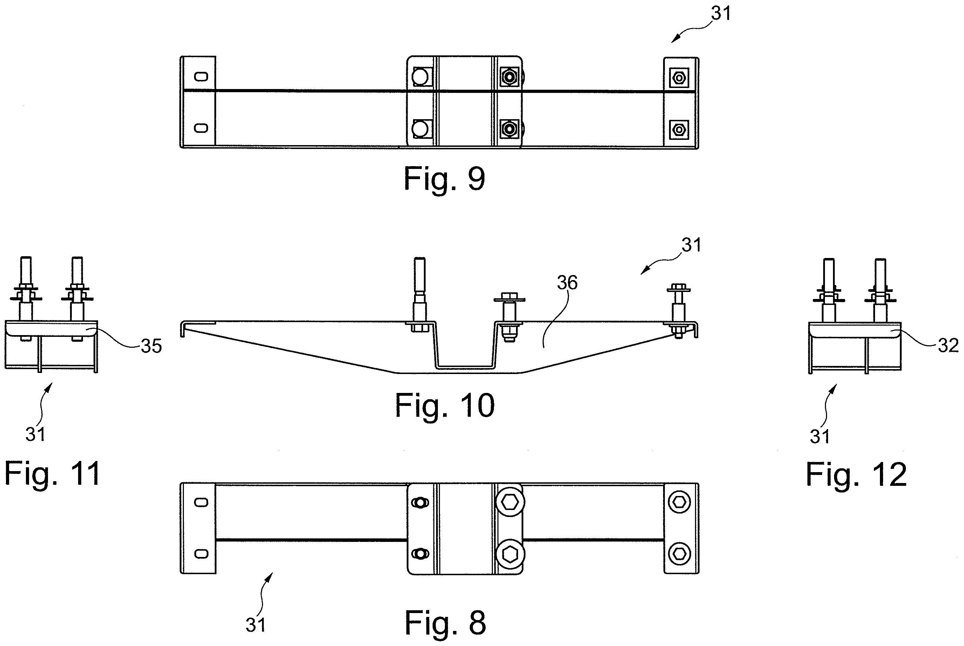

Die Verbindungselemente 6, 7 sind z.B. identisch ausgebildet. Das Verbindungselement 6, 7 erstreckt sich zwischen einer ersten Stützstelle 4, welche insbesondere direkt benachbart zur dritten Stützstelle 5 am Halteelement 1 vorhanden ist, und der dritten Stützstelle 5 entlang einer Länge L und einer Gesamthöhe H (Figur 1). Vorteilhafterweise, z.B. aus Gründen einer Gewichtsreduzierung, erstreckt sich das Verbindungselement 6, 7 entlang der Länge L nicht vollständig über die Gesamthöhe H. Dies ist insbesondere an einem vorteilhaft ausgestalteten Halteelement 31 nach den Figuren 7 bis 12 ersichtlich.

Das Halteelement 31 (Figuren 7 bis 12) umfasst vier Stützstellen 32 - 35. Die äußeren Stützstellen 32, 35, welche an sich gegenüberliegenden Enden des Halteelements 31 vorhanden sind, sind vorteilhafterweise als umgebogene oder umgewinkelte Bleche ausgebildet. Hierdurch umfassen die Stützstellen 32, 35 eine Stabilisierungsfunktion des Halteelements 31, welche am Halteelement 1 das Stabilisierungselement 8 ausübt. In Figur 7 transparent dargestellt ist das Rahmenprofil 27, an welchem das Halteelement 31 anordenbar ist. Verbindungselemente 36, 37 des Halteelements 31 sind in Richtung der Enden des Halteelements 31 sich verjüngend ausgebildet. Vorteilhafterweise besitzt das Verbindungselement 36, 37 im Bereich um eine Ausnehmung 38 des Halteelements 31 die vollständige Gesamthöhe H. Hierdurch ist das Halteelement 31 derart vorhanden, dass das Halteelement 31 auftretende Drehmomente, welche z.B. entstehen, wenn eine Kraft auf eine äußere Stützstelle 32, 35 einwirkt, vorteilhaft auf das Rahmenprofil 27 übertragen kann.

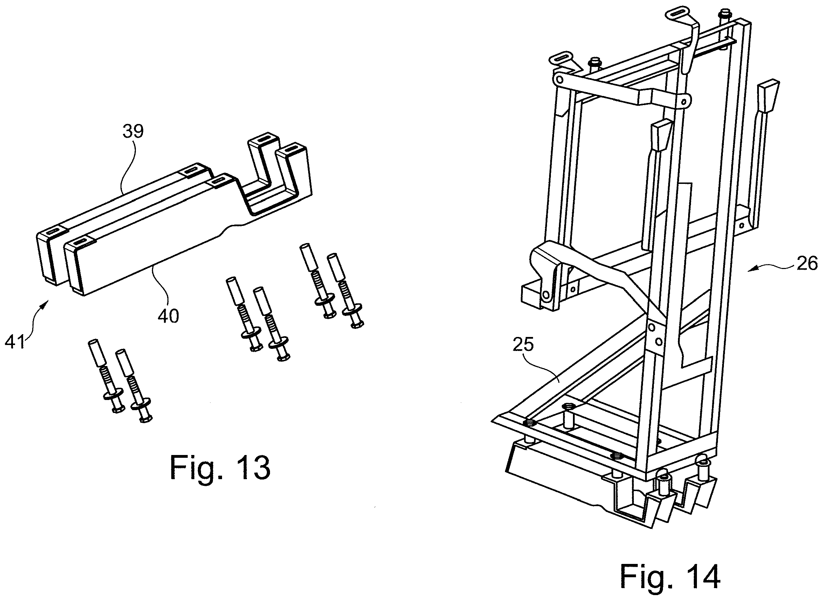

In Figur 13 ist eine weitere Variante eines Halteelements 41 gezeigt. Das Halteelement 41 ist vorteilhafterweise zweiteilig ausgebildet. Beide Teile 39, 40 des Halteelements 41 sind bevorzugterweise identisch aufgebaut. Insbesondere besitzt das Teil 39, 40 alle Eigenschaften eines einteiligen Halteelements 1, 31. Je nach Einbausituation an einem Fahrzeug ist eine mehrteilige Ausbildung des Halteelements 41 vorteilhaft.

In Figur 14 ist eine Einbausituation des Halteelements 41 am Gurtgestell 26 gezeigt. Nicht dargestellt sind das Rahmenprofil und z.B. ein Fußboden des Fahrzeugs, welche im angeordneten Zustand zwischen dem Halteelement 41 und dem Gurtgestell 26 klemmend vorhanden sind.

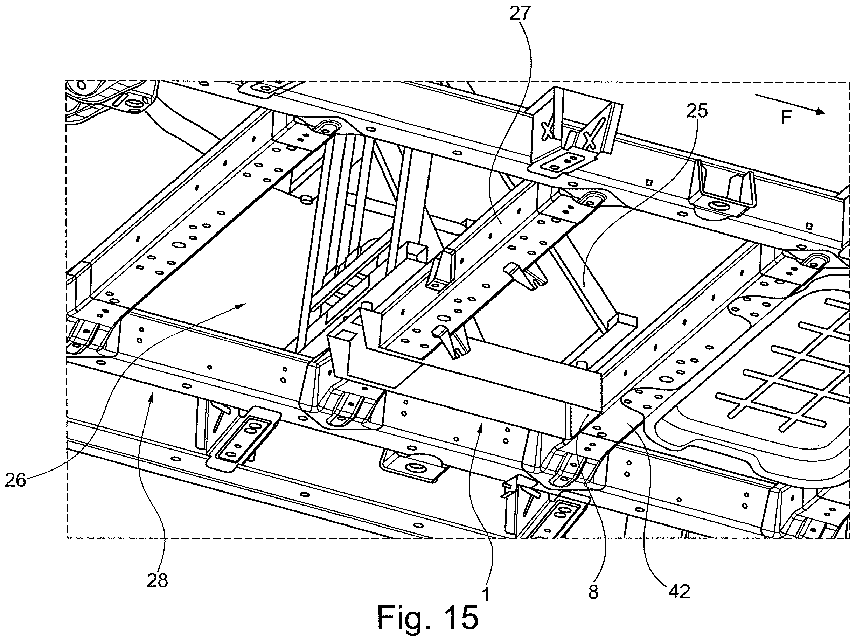

In Figur 15 ist eine Einbausituation des Haltelements 1 am Fahrzeugrahmen 28 und am Gurtgestell 26 gezeigt. Zu erkennen ist, dass eine Länge des Halteelements 1, insbesondere dass das Halteelement in Fahrrichtung F des Fahrzeugs gesehen eine Länge aufweist, welche vorteilhafterweise derart ist, sodass das Stabilisierungselement 8 und beispielsweise eine Schmalseite des Verbindungselements 6, 7 flächig, z.B. formschlüssig, an einem weiteren Rahmenprofil 42 anliegt, insbesondere anstößt, wenn das Halteelement 1 am Fahrzeugrahmen 28 angeordnet ist. Das Rahmenprofil 42 ist vorteilhafterweise parallel und beabstandet zum ersten Rahmenprofil 27, welches von der Ausnehmung 2 des Halteelements 1 umschlossen ist, am Fahrzeugrahmen 28 vorhanden.

### Bezugszeichenliste

- 1: Halteelement
- 2: Ausnehmungen
- 3 - 5: Stützstelle
- 6, 7: Verbindungselement
- 8: Stabilisierungselement
- 9 - 11: Anstehfläche
- 12 - 17: Aussparung
- 18 - 23: Befestigungsmittel
- 24: Ende
- 25: Schrägstütze
- 26: Gurtgestell
- 27: Rahmenprofil
- 28: Fahrzeugrahmen
- 29, 30: Aussparung
- 31: Halteelement
- 32 - 35: Stützstelle
- 36, 37: Verbindungselement
- 38: Ausnehmung
- 39, 40: Teil
- 41: Halteelement
- 42: Rahmenprofil
- 43: Öffnung

## Patentansprüche

1. Halteelement (1, 31, 41), insbesondere ein Kastenprofil, zur Befestigung eines Fahrzeugsitzes an einem Fahrzeug, wobei ein Fahrzeugboden des Fahrzeugs an einem Rahmenprofil (27, 41) des Fahrzeugs befestigt ist,
**dadurch gekennzeichnet, dass**
das Halteelement (1, 31, 41) an den Fahrzeugboden und/oder an das Rahmenprofil (27, 41) ansteckbar und/oder aufsteckbar ausgestaltet ist, wobei das Halteelement (1, 31, 41) im angeordneten Zustand an einer Unterseite des Fahrzeugbodens lösbar mit dem Fahrzeugboden und/oder dem Rahmenprofil (27, 41) verbindbar ist, wobei das Halteelement (1, 31, 41) eine Ausnehmung (2, 38) umfasst, wobei im angeordneten Zustand des Halteelements (1, 31, 41) am Fahrzeug das Rahmenprofil (27, 41) in der Ausnehmung (2, 38) aufgenommen ist, und wobei das Halteelement (1, 31, 41) eine Höhe aufweist, welche größer ist, als eine Höhe des Rahmenprofils (27, 41), wobei das Halteelement (1, 31, 41) mindestens zwei Stützstellen (3 - 5, 32 - 35) aufweist, wobei im angeordneten Zustand des Halteelements (1, 31, 41) am Fahrzeug die Stützstellen (3 - 5, 32 - 35) sich in einer Ebene parallel zum Fahrzeugboden erstrecken, wobei die Stützstellen (3 - 5, 32 - 35) dazu vorgesehen sind, mit dem Fahrzeugsitz verbunden zu werden.

2. Halteelement (1, 31, 41) nach Anspruch 1, **dadurch gekennzeichnet, dass** das Halteelement (1, 31, 41) Befestigungsmittel (18 - 23) zur Anordnung des Fahrzeugsitzes aufweist, wobei die Befestigungsmittel (18 - 23) derart am Halteelement (1, 31, 41) vorhanden sind, sodass im angeordneten Zustand des Halteelements (1, 31, 41) am Fahrzeug die Befestigungsmittel (18 - 23) das Rahmenprofil (27, 41) nicht durchdringen.

3. Halteelement (1, 31, 41) nach einem der vorangegangenen Ansprüche, **dadurch gekennzeichnet, dass** das Halteelement (1, 31, 41) derart vorhanden und an das Fahrzeug anordenbar ist, dass im angeordneten Zustand des Halteelements (1, 31, 41) am Fahrzeug das Rahmenprofil (27, 41) zwischen dem Halteelement (1, 31, 41) und dem Fahrzeugsitz geklemmt ist, ggf. mit einem dazwischen liegenden Fahrzeugboden.

4. Halteelement (1, 31, 41) nach dem vorangegangenen Anspruch 1, **dadurch gekennzeichnet, dass** an einer Stützstelle (3 - 5, 32 - 35) Befestigungsmittel (18 - 23) vorhanden sind.

5. Halteelement (1, 31, 41) nach dem vorangegangenen Anspruch 2, **dadurch gekennzeichnet, dass** ein Befestigungsmittel (18 - 23) dazu ausgebildet ist, ein Sicherheitsorgan eines Personensicherheitssystems, z.B. eine Gurtpeitsche, anzuordnen.

6. Halteelement (1, 31, 41) nach dem vorangegangenen Anspruch 1, **dadurch gekennzeichnet, dass** zwei Stützstellen (3 - 5, 32 - 35) mittels eines Verbindungselements (6, 7, 36, 37) miteinander verbunden sind, wobei das Verbindungselement (6, 7, 36, 37) die Höhe des Halteelements (1, 31, 41) definiert, wobei im angeordneten Zustand des Halteelements (1, 31, 41) am Fahrzeug das Verbindungselement (6, 7, 36, 37) sich in einer Ebene senkrecht zum Fahrzeugboden erstreckt.

7. Halteelement (1, 31, 41) nach dem vorangegangenen Anspruch 6, **dadurch gekennzeichnet, dass** das Halteelement (1, 31, 41) zwei Verbindungselemente (6, 7, 36, 37) aufweist und die Stützstellen (3 - 5, 32 - 35) die beiden Verbindungselemente (6, 7, 36, 37) verbinden.

8. Halteelement (1, 31, 41) nach einem der vorangegangenen Ansprüche 6 und/oder 7, **dadurch gekennzeichnet, dass** das Verbindungselement (6, 7, 36, 37) die Ausnehmung (2, 38) umfasst.

9. Halteelement (1, 31, 41) nach einem der vorangegangenen Ansprüche, **dadurch gekennzeichnet, dass** die Ausnehmung (2, 38) des Halteelements (1, 31, 41) als ein U-Profil ausgestaltet ist, welches im angeordnet Zustand des Halteelements (1, 31, 41) am Fahrzeug das Rahmenprofil (27, 41) umgreift, wobei an offenen Enden des U-Profils jeweils eine Stützstelle (3 - 5, 32 - 35) vorhanden ist.

10. Halteelement (1, 31, 41) nach einem der vorangegangenen Ansprüche 6, 7 und/oder 8, **dadurch gekennzeichnet, dass** ein Verbindungselement (6, 7, 36, 37) sich zwischen zwei Stützstellen (3 - 5, 32 - 35) erstreckt, wobei das Verbindungselement (6, 7, 36, 37) zwischen den zwei Stützstellen (3 - 5, 32 - 35) eine Höhe aufweist, welche mindestens der Hälfte einer Gesamthöhe H des Verbindungselements (6, 7, 36, 37) entspricht, insbesondere mindestens 80% der Gesamthöhe H des Verbindungselements (6, 7, 36, 37) entspricht.

11. Halteelement (1, 31, 41) nach einem der vorangegangenen Ansprüche, **dadurch gekennzeichnet, dass** die Stützstellen (3 - 5, 32 - 35) derart am Haltelement (1, 31, 41) vorhanden sind, dass zwischen zumindest zwei Stützstellen (3 - 5, 32 - 35) eine Öffnung (43) ausgebildet ist, sodass, insbesondere im angeordneten Zustand des Halteelements (1, 31, 41) am Fahrzeug, ein Gegenstand durch das Halteelement (1, 31, 41) fallen kann.

12. Halteelement (1, 31, 41) nach einem der vorangegangenen Ansprüche 6, 7, 8 und/oder 10, **dadurch gekennzeichnet, dass** ein Stabilisierungselement (8) vorhanden ist, wobei das Stabilisierungselement (8) die Verbindungselemente (6, 7, 36, 37) miteinander verbindet, wobei das Stabilisierungselement (8) sich in einer Ebene senkrecht zu den Verbindungselementen (6, 7, 36, 37) erstreckt und wobei die Ebene des Stabilisierungselements (8) sich in einem Winkel zu den Stützstellen (3 - 5, 32 - 35), insbesondere senkrecht zu den Stützstellen (3 - 5, 32 - 35) erstreckt.

13. Fahrzeug und/oder Fahrzeugsitz mit einem Halteelement (1, 31, 41) nach einem der vorangegangenen Ansprüche.

## Claims

1. Holding element (1, 31, 41), in particular a box profile, for securing a vehicle seat onto a vehicle, wherein a vehicle floor of the vehicle is fastened onto a frame profile (27, 41) of the vehicle,
**characterised in that**
the holding element (1, 31, 41) is designed to be attached and/or fitted onto the vehicle floor and/or onto the frame profile (27, 41), wherein the holding element (1, 31, 41) in the arranged state on an underside of the vehicle floor is connected detachably to the vehicle floor and/or the frame profile (27, 41), wherein the holding element (1, 31, 41) comprises a recess (2, 38), wherein in the arranged state of the holding element (1, 31, 41) on the vehicle the frame profile (27, 41) is mounted in the recess (2, 38), and wherein the holding element (1, 31, 41) has a height which is greater than a height of the frame profile (27, 41), wherein the holding element (1, 31, 41) has at least two support points (3 - 5, 32 - 35), wherein in the arranged state of the holding element (1, 31, 41) on the vehicle the support points (3 - 5, 32 - 35) extend in a plane parallel to the vehicle floor, wherein the support points (3 - 5, 32 - 35) are provided to be connected to the vehicle seat.

2. Holding element (1, 31, 41) according to claim 1, **characterised in that** the holding element (1, 31, 41) has fastening elements (18 - 23) for the arrangement of the vehicle seat, wherein the fastening elements (18 - 23) are provided on the holding element (1, 31, 41) such that in the arranged state of the holding element (1, 31, 41) on the vehicle the fastening elements (18 - 23) do not penetrate the frame profile (27, 41).

3. Holding element (1, 31, 41) according to any of the preceding claims, **characterised in that** the holding element (1, 31, 41) is provided and can be arranged on the vehicle such that in the arranged state of the holding element (1, 31, 41) on the vehicle the frame profile (27, 41) is clamped between the holding element (1, 31, 41) and the vehicle seat, if necessary with a vehicle floor arranged in between.

4. Holding element (1, 31, 41) according to the preceding claim 1, **characterised in that** on a support point (3 - 5, 32 - 35) fastening elements (18 - 23) are provided.

5. Holding element (1, 31, 41) according to the preceding claim 2, **characterised in that** a fastening element (18 - 23) is designed to arrange a safety element of a passenger safety system, e.g. a belt system.

6. Holding element (1, 31, 41) according to the preceding claim 1, **characterised in that** two support points (3 - 5, 32 - 35) are connected to one another by means of a connecting element (6, 7, 36, 37), wherein the connecting element (6, 7, 36, 37) defines the height of the holding element (1, 31, 41), wherein in the arranged state of the holding element (1, 31, 41) on the vehicle the connecting element (6, 7, 36, 37) extends in a plane perpendicular to the vehicle floor.

7. Holding element (1, 31, 41) according to the preceding claim 6, **characterised in that** the holding element (1, 31, 41) has two connecting elements (6, 7, 36, 37) and the support points (3 - 5, 32 - 35) connect the two connecting elements (6, 7, 36, 37).

8. Holding element (1, 31, 41) according to any of the preceding claims 6 and/or 7, **characterised in that** the connecting element (6, 7, 36, 37) comprises the recess (2, 38).

9. Holding element (1, 31, 41) according to any of the preceding claims, **characterised in that** the recess (2, 38) of the holding element (1, 31, 41) is configured as a U profile, which in the arranged state of the holding element (1, 31, 41) on the vehicle grips around the frame profile (27, 41), wherein at open ends of the U profile a support point (3 - 5, 32 - 35) is provided respectively.

10. Holding element (1, 31, 41) according to any of the preceding claims, **characterised in that** a connecting element (6, 7, 36, 37) extends between two support points (3 - 5, 32 - 35), wherein the connecting element (6, 7, 36, 37) between the two support points (3 - 5, 32 - 35) has a height which corresponds to at least half of a total height H of the connecting element (6, 7, 36, 37), in particular to at least 80% of the total height H of the connecting element (6, 7, 36, 37).

11. Holding element (1, 31, 41) according to any of the preceding claims, **characterised in that** the support points (3 - 5, 32 - 35) are provided on the holding element (1, 31, 41) such that between at least two support points (3 - 5, 32 - 35) an opening (43) is formed so that, in particular in the arranged state of the holding element (1, 31, 41) on the vehicle, an object can fall through the holding element (1, 31, 41).

12. Holding element (1, 31, 41) according to any of the preceding claims 6, 7, 8 and/or 10, **characterised in that** a stabilising element (8) is provided, wherein the stabilising element (8) connects the connecting elements (6, 7, 36, 37) to one another, wherein the stabilising element (8) extends in a plane perpendicular to the connecting elements (6, 7, 36, 37) and wherein the plane of the stabilising element (8) extends at an angle to the support points (3 - 5, 32 - 35), in particular perpendicular to the support points (3 - 5, 32 - 35).

13. Vehicle and/or vehicle seat with a holding element (1, 31, 41) according to any of the preceding claims.

## Revendications

1. Élément de retenue (1, 31, 41), en particulier un profilé en caisson, pour la fixation à un véhicule d'un siège de véhicule, un plancher de véhicule du véhicule étant fixé à un profilé de cadre (27, 41) du véhicule, **caractérisé en ce que** l'élément de retenue (1, 31, 41) est conçu pour pouvoir être enfiché et/ou emboîté sur le plancher du véhicule et/ou sur le profilé de cadre (27, 41), l'élément de retenue (1, 31, 41), à l'état monté sur une face inférieure du plancher du véhicule, pouvant être relié de manière réversible au plancher du véhicule et/ou au profilé de cadre (27, 41), l'élément de retenue (1, 31, 41) présentant un évidement (2, 38), le profilé de cadre (27, 41) étant reçu dans l'évidement (2, 38) lorsque l'élément de retenue (1, 31, 41) est placé sur le véhicule, l'élément de retenue (1, 31, 41) présentant une hauteur qui est supérieure à une hauteur du profilé de cadre (27, 41), l'élément de retenue (1, 31, 41) présente au moins deux points d'appui (3-5, 32-35), les points d'appui (3-5, 32-35) s'étendant, lorsque l'élément de retenue (1, 31, 41) est placé sur le véhicule, dans un plan parallèle au plancher du véhicule, les points d'appui (3-5, 32-35) étant destinés à être reliés au siège du véhicule.

2. Élément de retenue (1, 31, 41) selon la revendication 1, **caractérisé en ce que** l'élément de retenue (1, 31, 41) présente des moyens de fixation (18 - 23) pour la mise en place du siège de véhicule, les moyens de fixation (18 - 23) étant présents sur l'élément de retenue (1, 31, 41) de telle sorte que, lorsque l'élément de retenue (1, 31, 41) est placé sur le véhicule, les moyens de fixation (18 - 23) ne traversent pas le profilé de cadre (27, 41).

3. Élément de retenue (1, 31, 41) selon l'une des revendications précédentes, **caractérisé en ce que** l'élément de retenue (1, 31, 41) est présent et peut être placé sur le véhicule de telle sorte que, lorsque l'élément de retenue (1, 31, 41) est placé sur le véhicule, le profilé de cadre (27, 41) est serré entre l'élément de retenue (1, 31, 41) et le siège du véhicule, le cas échéant avec un plancher de véhicule situé entre les deux.

4. Élément de retenue (1, 31, 41) selon la revendication 1 précédente, **caractérisé en ce que** des moyens de fixation (18 - 23) sont présents sur un point d'appui (3 - 5, 32 - 35).

5. Élément de retenue (1, 31, 41) selon la revendication 2 précédente, **caractérisé en ce que** des moyens de fixation (18 - 23) sont conçus pour placer un organe de sécurité d'un système de sécurité personnelle, par exemple une boucle de fixation.

6. Élément de retenue (1, 31, 41) selon la revendication 1 précédente, **caractérisé en ce que** deux points d'appui (3-5, 32-35) sont reliés entre eux au moyen d'un élément de liaison (6, 7, 36, 37), l'élément de liaison (6, 7, 36, 37) définissant la hauteur de l'élément de retenue (1, 31, 41), l'élément de liaison (6, 7, 36, 37) s'étendant, lorsque l'élément de retenue (1, 31, 41) est placé sur le véhicule, dans un plan perpendiculaire au plancher du véhicule.

7. Élément de retenue (1, 31, 41) selon la revendication 6 précédente, **caractérisé en ce que** l'élément de retenue (1, 31, 41) présente deux éléments de liaison (6, 7, 36, 37), et les points d'appui (3 - 5, 32 - 35) relient les deux éléments de liaison (6, 7, 36, 37).

8. Élément de retenue (1, 31, 41) selon l'une des revendications précédentes 6 et/ou 7, **caractérisé en ce que** l'élément de liaison (6, 7, 36, 37) comprend l'évidement (2, 38).

9. Élément de retenue (1, 31, 41) selon l'une des revendications précédentes, **caractérisé en ce que** l'évidement (2, 38) de l'élément de retenue (1, 31, 41) est conçu sous la forme d'un profilé en U qui, lorsque l'élément de retenue (1, 31, 41) est placé sur le véhicule, entoure le profilé de cadre (27, 41), un point d'appui (3 - 5, 32 - 35) étant prévu à chaque extrémité ouverte du profilé en U.

10. Élément de retenue (1, 31, 41) selon l'une des revendications précédentes 6, 7 et/ou 8, **caractérisé en ce qu'**un élément de liaison (6, 7, 36, 37) s'étend entre deux points d'appui (3 - 5, 32 - 35), l'élément de liaison (6, 7, 36, 37) présente entre les deux points d'appui (3 - 5, 32 - 35) une hauteur correspondant à au moins la moitié d'une hauteur totale H de l'élément de liaison (6, 7, 36, 37), en particulier à au moins 80 % de la hauteur totale H de l'élément de liaison (6, 7, 36, 37).

11. Élément de retenue (1, 31, 41) selon l'une des revendications précédentes, **caractérisé en ce que** les points d'appui (3 - 5, 32 - 35) sont présents sur l'élément de retenue (1, 31, 41) de telle sorte qu'une ouverture (43) est formée entre au moins deux points d'appui (3 - 5, 32 - 35), de sorte qu'un objet peut tomber à travers l'élément de retenue (1, 31, 41), en particulier lorsque l'élément de retenue (1, 31, 41) est placé sur le véhicule.

12. Élément de retenue (1, 31, 41) selon l'une des revendications précédentes 6, 7, 8 et/ou 10, **caractérisé en ce qu'il** est prévu un élément de stabilisation (8), lequel élément de stabilisation (8) relie les éléments de liaison (6, 7, 36, 37) entre eux, l'élément de stabilisation (8) s'étendant dans un plan perpendiculaire aux éléments de liaison (6, 7, 36, 37), et le plan de l'élément de stabilisation (8) s'étendant de façon inclinée par rapport aux points d'appui (3 - 5, 32 - 35), en particulier perpendiculairement aux points d'appui (3 - 5, 32 - 35).

13. Véhicule et/ou siège de véhicule avec un élément de retenue (1, 31, 41) selon l'une des revendications précédentes.
